# EUROPÄISCHE PATENTSCHRIFT

(11) **EP 2 368 418 B1**
(45) Veröffentlichungstag und Bekanntmachung des Hinweises auf die Patenterteilung: **06.06.2012**
(21) Anmeldenummer: 11001962.7
(22) Anmeldetag: 10.03.2011
(51) Int. Cl.: A01D 65/04

(54) **Vorrichtung zum Aufrichten von Halmgut**
Device for aligning crops
Dispositif d'alignement de matières en brins

(30) Priorität: 24.03.2010 DE 102010012686
(43) Veröffentlichungstag der Anmeldung: 28.09.2011
(73) Patentinhaber: Müthing GmbH & Co. KG, 59955 Winterberg (DE)
(72) Erfinder: Müthing, Michael, Dr., 59955 Winterberg (DE); Paul, Ralf, 97215 Uffenheim (DE)
(74) Vertreter: Weeg, Thomas

(56) Entgegenhaltungen:
- DE-C- 563 863
- US-A- 3 785 132
- US-A- 3 821 877

## Beschreibung

Die vorliegende Erfindung bezieht sich auf eine Vorrichtung zum Aufrichten von Halmgut mit zumindest einem an einem Halterahmen angeordneten Aufrichtewerkzeug.

Es stellt sich zunehmend als ein Problem in der modernen Landwirtschaft dar, dass Pflanzen oder Pflanzenstoppel von Halmgut bei Bearbeitungsvorgängen auf dem Feld von den Maschinen umgeknickt und in den Boden eingewalzt werden. Die Problemstellung betrifft insbesondere Maispflanzen, aber auch alle anderen Arten von Halmgut. Durch die immer schwerer werdenden Arbeits- und Transportgeräte, die in der Landwirtschaft eingesetzt werden, haben auch die Reifenbreiten dieser Fahrzeuge kontinuierlich zugenommen. Durch unterschiedliche Spurbreiten von selbstfahrenden Erntemaschinen, Traktoren und Anhängern, die beispielsweise bei Erntearbeiten nebeneinander her fahren, können erhebliche Anteile der Pflanzenstoppeln über die Arbeitsbreite der Erntemaschine von diesen Fahrzeugen platt gewalzt werden. Wenn die auf dem Feld verbleibenden Pflanzenreste des Halmguts, wie beispielsweise die Stoppeln von Maispflanzen, noch nachbearbeitet werden sollen, beispielweise indem die Stoppeln zur Vernichtung von Schädlingen wie dem Maiszünsler gemulcht oder abgefräst werden, können die niedergewalzten oder in den Boden eingewalzten Pflanzenreste von den Bearbeitungswerkzeugen der Nachbearbeitungsgeräte nicht mehr erreicht werden, und die durch die Nachbearbeitung erwünschten Effekte sind nicht mehr flächendeckend erzielbar.

Nach einem vorherrschenden Lösungsansatz sollen die Mulchgeräte mit ihren rotierenden Werkzeugen die Emtegutreste aufrichten, die Arbeitsergebnisse sind jedoch in der Realität nicht zufriedenstellend. Die Bearbeitungswerkzeuge der Mulchgeräte haben sich als Aufrichtewerkzeug nicht bewährt.

Demgemäß ist es die Aufgabe der vorliegenden Erfindung, eine Vorrichtung zu schaffen, mit der umgeknickte oder in den Boden eingewalzte Halmgutreste wieder aufgerichtet werden können, damit diese für die Werkzeuge nachfolgender Nachbearbeitungsgeräte wieder erreichbar sind.

Die Aufgabe wird gelöst, indem das Aufrichtewerkzeug einen drehbar gelagerten Rotationskörper, der eine Kreisform aufweist und mit seinem Außenumfang auf einer Bodenfläche abstützbar ist, und eine Anzahl von an dem Rotationskörper befestigten, über den Umfang des Rotationsköpers hinausragenden und um den Umfang des Rotationskörpers verteilten Zinken aufweist, wobei die Längsachsen der Zinken in ihrem über den Außenumfang des Rotationskörpers hinausragenden Abschnitt in einem Anstellwinkel zur Rotationsebene des Rotationskörpers angeordnet sind.

Die Zinken sind dazu gedacht, bei einer Vorwärtsbewegung der Vorrichtung in Fahrtrichtung zunächst zumindest teilweise in den Boden einzusinken, um auch in den Boden tiefer eingefahrene Pflanzengutreste von unten oder zumindest von der Seite her unterfassen zu können. Der Rotationskörper soll nicht oder nur geringfügig in den Boden einsinken, da keine Bodenbearbeitung durchgeführt werden soll. Würde der Boden zu sehr aufgelockert, wären die Halmgutreste nicht mehr ausreichend fest im Boden verankert, um noch an ihnen eine Nachbearbeitung vornehmen zu können, wie beispielsweise ein Abschlegeln. Sinkt der Rotationskörper zu tief in den Boden ein, kann die gleichmäßige Rotationsbewegung sogar gestört werden. Aus diesem Grund sollte der Rotationskörper einen gewissen Mindestdurchmesser aufweisen, damit sich eine dem Einsinken in den Boden entgegen wirkende, ausreichend große Aufstützfläche des Rotationskörpers ergibt. Je größer die Fläche des Kreisbogens ist, der sich mit dem Boden in Kontakt befindet, umso geringer sinkt der Rotationskörper in den Boden ein. Durch die Kreisform des Rotationskörpers, die bei einem Raumkörper auch in einer zylindrischen Raumform gegeben ist, kann sich der Rotationskörper besonders gut und gleichmäßig auf dem Boden abrollen.

Der Rotationskörper dient insbesondere dem Zweck, die Zinken zu tragen und diese rotierend zu bewegen. Dies ist gut möglich, wenn der Rotationskörper nicht selbst aktiv angetrieben ist, sondern sich passiv mitdreht infolge der Vorwärtsbewegung der Vorrichtung über ein Feld. Durch den Bodenkontakt des Rotationskörpers zum Boden entsteht ein Reibschluss, durch den der Rotationskörper bei einer Vorwärtsbewegung der Vorrichtung in eine drehende Bewegung versetzt wird. Durch die in den Boden gedrückten Zinken und eventuell auch den leicht in den Boden eingedrückten Rotationskörper besteht zusätzlich eine gewisse formschlüssige Verbindung des Rotationskörpers mit dem Boden, durch den eine Rotationsbewegung unterstützt wird. Natürlich ist es auch möglich, den Rotationskörper mit einem Antrieb zu versehen.

Haben die Spitzen der Zinken infolge der Rotationsbewegung ihre größte Eindringtiefe in den Boden erreicht und werden sie durch die fortgesetzte Rotationsbewegung wieder aus dem Boden herausgehoben, heben sie dabei auch die im Wirkbereich der Zinken liegenden Halmgutreste an und heben diese aus dem Boden heraus und/oder vom Boden hoch. Selbst dann, wenn die Zinken den Boden verlassen, wirken sie noch auf die Halmgutreste ein und heben diese an, bis diese seitlich abgestreift werden oder die Zinken über die Länge der Halmgutreste hinaus hoch bewegt werden. Im Ergebnis sind die meisten der Halmgutreste, die von den Zinken erfasst wurden, infolge des Kontakts mit den Zinken wieder aus dem Boden heraus und vom Boden abgehoben, so dass diese wieder für nachgeordnete Bearbeitungswerkzeuge erreichbar sind.

Durch den Anstellwinkel, um den die Längsachsen der Zinken in ihrem über den Außenumfang des Rotationskörpers hinausragenden Abschnitt zur Rotationsebene des Rotationskörpers angestellt sind, ergibt sich zum Rotationskörper ein seitlicher Versatz in einen freien Raum hinein, in dem sich kein Bauvolumen des Rotationskörpers befindet. In diesem freien Raum ist es gut möglich, Halmgutreste anzuheben, ohne dass diese dabei mit dem Rotationskörper kollidieren.

Auf das Arbeitsergebnis der Vorrichtung hat es nur einen geringen Einfluss, ob die überstehenden Enden der Zinken mit ihrer Längsachse in einer von der Rotationsachse des Rotationskörpers aus gesehen genau radialen Richtung oder in Drehrichtung leicht vor- oder nacheilend ausgerichtet sind. Im Wesentlichen bewirken die Zin-ken nur eine punktuelle seitliche Lochung des Bodens, um unter die Halmgutreste zu gelangen. Eine Zerkrümelung des Bodens oder eine Tiefenwirkung wird dadurch nicht erreicht - sie soll möglichst vermieden werden, um die Tragfähigkeit des Bodens für eventuelle nachfolgende Bearbeitungsgänge zu erhalten und die Halmgutreste ausreichend fest im Boden verankert zu lassen.

Die Anzahl der Zinken, die auf einem Rotationskörper angebracht sind, ist vom Durchmesser des Rotationskörpers, dem Abstand der aufzurichtenden Halmgutreste voneinander und der Länge der aufzurichtenden Halmgutreste abhängig. Eine zu große Zahl von Zinken birgt das Risiko in sich, dass die Halmgutreste eher zusätzlich in den Boden gedrückt werden könnten. Eine zu geringe Zahl von Zinken bewirkt, dass zu wenige der mit der Vorrichtung überfahrenen Halmgutreste von den Zinken erfasst und aufgerichtet werden. Für das Aufrichten von Maisstoppeln haben sich bei einem Durchmesser des Rotationskörpers von beispielsweise ca. 50 cm 8 - 12 gleichmäßig über den Umfang verteilt angeordnete Zinken bewährt. Bei einem kleineren Durchmesser können weniger und bei einem größeren Durchmesser mehr Zinken vorgesehen sein, je nach Bedarf.

Nach einer Ausgestaltung der Erfindung beträgt der Anstellwinkel der Zinken 30° bis 60° zur Rotationsebene und die Zinken ragen um eine Länge von 3 cm bis 8 cm über den Außenumfang des Rotationskörpers hinaus. Bei dieser Ausgestaltung der Zinken ergibt sich eine vorteilhafte Hebewirkung. Bei einem zu geringen Anstellwinkel können die Zinken die Halmgutreste nicht fest genug ergreifen und anheben, die Halmgutreste gleiten dann schon im Boden seitlich an den Zinken ab oder werden gar nicht erfasst. Bei einem zu großen Anstellwinkel untergreifen die Zinken die Halmgutreste nicht mehr, sondern drücken diese nur noch tiefer in den Boden. Außerdem steigt der Kraftaufwand zu stark an, um die Zinken überhaupt in den Boden unter die Halmgutreste drücken zu können. Sind die Zinken zu lang, graben sie sich zu sehr in den Boden ein, und sind sie zu kurz, erreichen sie die in den Boden eingefahrenen Halmgutreste nicht.

Nach einer Ausgestaltung der Erfindung weisen die Zinken eine gerundete Oberfläche auf. Insbesondere bei einer zylindrischen Form der Zinken ergibt sich ein guter Kompromiss zwischen einer ausreichenden Stabilität, Belastbarkeit und Dauerhaltbarkeit der Zinken, einem geringen Kraftaufwand, um die Zinken in den Boden und unter die Halmgutreste zu drücken, und einer guten Fass- und Aufrichtefunktion der Zinken zu den Halmgutresten, die leicht auf der Oberfläche eines jeweiligen Zinken gleiten können.

Nach einer Ausgestaltung der Erfindung ist der Rotationskörper als Scheibe ausgestaltet, auf die die Zinken aufgesetzt sind. Ein scheibenförmiger Rotationskörper ist leicht, kostengünstig herstellbar, ausreichend belastbar und die Zinken sind leicht an ihm befestigbar. Die Scheibe kann flach oder konvex oder konkav gebogen gestaltet sein. Auch eine Doppelscheibe ist möglich, bei der die Zinken zwischen den beiden Scheiben angeordnet sind. Die Scheibe kann als Stahl-, Guss- oder Kunststoffteil ausgestaltet sein.

Nach einer Ausgestaltung der Erfindung weist die Scheibe Versteifungselemente auf. Da die Scheibe insbesondere in den Bereichen besonders mechanisch belastet ist, in denen die Zinken mit der Scheibe verbunden sind, können in diesen Bereichen Materialverdickungen, Knotenbleche, Auflagen, Leisten oder dergleichen vorhanden sein, um die aus den Zinken in die Scheibe wirkenden Lasten über eine größere Fläche der Scheibe aufzunehmen und zu verteilen.

Nach einer Ausgestaltung der Erfindung ist die Rotationsachse der Scheibe in einem Winkel von 10° bis 60° im Verhältnis zur Fahrtrichtung der Vorrichtung und/oder in einem Winkel von 10° bis 45° zur Waagerechten angestellt.

Die Anstellung der Rotationsachse im Verhältnis zur Fahrtrichtung bewirkt, dass die Scheibe eine größere Arbeits- und Wirkungsbreite erhält. Die Zinken dringen in einem Bereich in den Boden ein, der seitlich quer zur Fahrtrichtung zum Austrittsbereich versetzt ist. Durch diesen Querversatz ist es möglich, in einem Bereich mit den Zinken in den Boden einzudringen, in dem sich keine Halmgutreste befinden, und bei der gleichzeitigen Vorwärts- und Rotationsbewegung der Scheibe einen Querversatz der Zinken im Boden zu schaffen, bei dem Halmgutreste untergriffen und bei fortgesetzter Rotationsbewegung angehoben werden können. Fährt man mit einer Scheibe, bei der die Rotationsachse in einem Winkel zur Fahrtrichtung angestellt ist, an einer Emtegutreihe entlang, wie sie sich beispielsweise beim Drillen von Mais ergibt, so ist es möglich, mit den Zinken knapp neben der Stoppelreihe in den Boden einzutauchen, sodann mit der Zinkenspitze einen Stoppel zu unterfassen und diesen dann aus dem Boden herauszuheben und aufzurichten.

Durch Verstellung der Rotationsachse im Verhältnis zur Waagerechten können je nach deren Form günstigere Kraftverläufe in den Zinken oder der Scheibe erzielt werden, oder durch die infolge der Anstellung aus der Fahrtrichtung gesehen elliptische Bewegungsbahn der Zinken werden flachere Bewegungsprofile der Zinken erzielt, durch die eine vorteilhafte Hebefunktion erzielt werden kann. Ein günstiger Kraftverlauf ergibt sich beispielsweise bei einer ziehenden Anstellung der Scheibe.

Nach einer Ausgestaltung der Erfindung ist die Scheibe in Längsrichtung, Querrichtung und/oder um die Hochachse insgesamt und/oder die Rotationsachse der Scheibe im Verhältnis zur Fahrtrichtung und/oder der Waagerechten verstellbar am Halterahmen befestigt. Durch die Verstellung in Längsrichtung kann die Vorrichtung an das jeweilige Halmgut und/oder vor- oder nachgeordnete Werkzeuge angepasst werden. Durch eine Querverstellung kann die Vorrichtung an unterschiedliche Reihenabstände von in Reihen gepflanztem Halmgut angepasst werden. Durch eine Verstellung um die Hochachse kann ein geeigneter Anstellwinkel der Scheibe im Verhältnis zur Fahrtrichtung eingestellt werden.

Nach einer Ausgestaltung der Erfindung ist der Scheibe eine Abstreifvorrichtung zugeordnet. Wenn sich ein Abschnitt der Scheibe aus dem Boden erhebt, können noch Pflanzenreste oder Boden an der Scheibe anhaften. Wenn sich zunehmend Material an der Scheibe aufbaut, kann das die Funktion der Vorrichtung insgesamt beeinträchtigen. Um einen solchen Materialaufbau zu verhindern, ist es vorteilhaft, eine Abstreifvorrichtung vorzusehen, die auf der Oberfläche der Scheibe anhaftende Stoffe abstreift. Die Abstreifvorrichtung kann sich an einer Stelle vollständig oder teilweise über den Radius der Scheibe erstreckend in großer Nähe zur Scheibe angeordnet sein, wobei sich bei einer zur radialen Richtung leicht nacheilenden Anordnung eine materialabweisende Komponente ergibt, durch die von der Scheibe abgelöstes material nach außen abgefördert wird. Der Abstreifer kann eine Querschnittsform aufweisen, die sich entgegen der Drehrichtung der Scheibe verjüngt, so dass sie eine Art Klinge mit scharfer Vorderkante bildet.

Nach einer Ausgestaltung der Erfindung weist die Vorrichtung eine Schleifkufe oder einen beweglichen Schleifkörper, wie beispielsweise eine bewegliche Kugel auf. Die Schleifkufe stellt eine Art Tiefenbegrenzer dar, durch die ein zu tiefes Eindringen der Zinken und/oder Scheiben in den Boden verhindert werden kann. Die Schleifkufe kann höhenverstellbar, klappbar und/oder demontierbar ausgebildet sein.

Nach einer Ausgestaltung der Erfindung ist die Scheibe über ein Kraftspeicherelement am Halterahmen abgestützt. Ein Kraftspeicherelement kann in unterschiedlicher Form und zu unterschiedlichen Zwecken vorgesehen sein. Um die Kraftspeicherfunktion nutzen zu können, ist es vorteilhaft, wenn die Scheibe relativ zum Halterahmen beweglich mit diesem verbunden ist. Bei einer möglichen Gelenk- oder Scharnierverbindung kann eine Feder oder ein Hydraulikzylinder als Kraftspeicher entfernt vom Gelenk oder dem Scharnier angeordnet sein.

So kann ein Kraftspeicherelement beispielsweise in Gestalt einer mechanischen Feder vorgesehen sein, die als Überlastsicherung dient. Wirken auf die Zinken oder eine oder mehrere durch die Feder abgesicherte Scheiben Kräfte ein, durch die diese beschädigt werden könnten, lässt die Feder bei einer Überschreitung der vorgesehenen Kraftgrenzen eine Ausweichbewegung der Scheibe zu, durch die einwirkenden Kraftspitzen verringert werden.

Zusätzlich oder alternativ kann die Feder aber auch dazu dienen, eine Art Bodenkopierfunktion für eine oder mehrere Scheiben zu realisieren. Wird die Scheibe über den Halterahmen auf eine Arbeitshöhe fest eingestellt, könnte die Scheibe beim Passieren von Bodenvertiefungen nicht dem absinkenden Bodenniveau folgen, wenn sie starr mit dem Halterahmen verbunden wäre. Wird die Scheibe jedoch bei einer entsprechenden Höheneinstellung des Halterahmens über die Feder mit einem gewissen Anpressdruck auf den Boden gedrückt, würde die Feder den Anpressdruck auf die Scheibe auch noch weitgehend aufrecht erhalten, wenn die Scheibe eine Bodenvertiefung passiert und dem absinkenden Bodenniveau und dem einwirkenden Anpressdruck folgend nach unten ausweicht. Trotz der Ausweichbewegung würde die Scheibe auch in der Bodenvertiefung wie beispielsweise einer Fahrspur noch Halmgutreste aus dem Boden ausheben und anheben. Die Vorrichtung ist so auch bei unebenen Bodenverhältnissen mit einer guten Aufrichtfunktion einsetzbar.

Anstelle oder neben einer mechanischen Feder können auch andere Kraftspeicher verwendet werden, wie beispielsweise von einer Hydraulik beaufschlagte und mit einer geeigneten Steuerung versehene Hydraulikzylinder, oder sensorgesteuerte Stellmotoren, auch mit elektrischem Antrieb. Als Kraftspeicher können auch formelastische Elemente wie beispielsweise Gummiblöcke oder Gasblasen eingesetzt werden.

Nach einer Ausgestaltung der Erfindung sind am Halterahmen mehrere Scheiben in einer in Fahrtrichtung aufeinander folgenden Staffelung angeordnet. So können beispielsweise zwei in Fahrtrichtung aufeinander folgende Scheiben nacheinander einen Halmgutrest zweimal anheben, wodurch das erzielte Arbeitsergebnis verbessert wird. Die Staffelung in Fahrtrichtung kann auch zusätzlich einen seitlichen Versatz der einzelnen Staffeln zueinander vorsehen, beispielsweise, um eine größere Arbeitsbreite der Vorrichtung zu erzielen.

Nach einer Ausgestaltung der Erfindung sind am Halterahmen mehrere Scheiben angeordnet und die Rotationsachsen der Scheiben in unterschiedlichen Richtungen zur Fahrtrichtung angestellt. Durch die Ausrichtung der Rotationsachsen in unterschiedliche Richtungen werden unterschiedliche Hebeimpulse auf die Halmgutreste erzeugt, durch die die Arbeitswirkung der Vorrichtung verbessert werden kann. Es ist insbesondere möglich, bei beispielsweise zwei hintereinander in Fahrtrichtung gestaffelt und leicht zueinander versetzt angeordneten Scheiben, deren Rotationsachsen in unterschiedlichen Richtungen angestellt sind, beispielsweise die eine nach rechts und die andere nach links zur Fahrtrichtung, eine auf eine Stoppelreihe ausgerichtete Aufrichtvorrichtung schaffen, die zweimal aufeinanderfolgend aus entgegen gesetzten Richtungen die Halmgutreste erfasst und anhebt. Mit einer solchen Vorrichtung können sehr gute Arbeitsergebnisse erzielt werden.

Nach einer Ausgestaltung der Erfindung ist die Vorrichtung im Frontanbau gemeinsam mit einem Nachbearbeitungsgerät, im Frontanbau mit einem seitlich am Traktor angeordneten Nachbearbeitungsgerät, im Seitenanbau gemeinsam mit einem Nachbearbeitungsgerät oder im Heckanbau gemeinsam mit einem Nachbearbeitungsgerät an einen Traktor anbaubar. Durch eine dieser Anbaumöglichkeiten der Vorrichtung an den Traktor können die von der Vorrichtung aufgerichteten Halmgutreste bei einer Überfahrt sofort nachbearbeitet werden, ohne dass sie nach dem Aufrichten noch einmal wieder von einem Fahrzeug überrollt und erneut in den Boden eingewalzt werden. Als Nachbearbeitungsgeräte können beispielsweise Fräsen oder Mulchgeräte verwendet werden. Ein nochmaliges Überfahren des Feldes zur Nachbearbeitung der aufgerichteten Stoppel ist so nicht mehr erforderlich.

Nach einer Ausgestaltung der Erfindung ist die Vorrichtung in ein Gerät zur Halmgutbearbeitung, beispielsweise zur Halmgutzerkleinerung wie eine Mähvorrichtung, ein Mulchgerät oder eine Fräse, integriert. Durch den integrierten Einbau ist es auch möglich, bei nur einer Überfahrt über das Feld die Halmgutreste sowohl aufzurichten als auch nachzubearbeiten.

Für die Erfindung spielt es keine Rolle, wie die Scheiben im Verhältnis zum Halterahmen angeordnet sind. Die Scheiben können von oben gehalten oder geschoben oder gezogen sein, je nachdem, wie sich dies in einem jeweiligen Anwendungsfall in Abhängigkeit von den Umgebungsbedingungen umsetzen lässt.

Es wird ausdrücklich darauf hingewiesen, dass die vorstehend beschriebenen vorteilhaften Ausgestaltungen jeweils für sich mit den Merkmalen des Hauptanspruchs, aber auch in beliebiger Kombination untereinander miteinander kombinierbar sind. Weitere Abwandlungen und bevorzugte Ausgestaltungen der Erfindung ergeben sich aus der nachfolgenden gegenständlichen Beschreibung und den Zeichnungen. Die Erfindung wird nachfolgend anhand eines Ausführungsbeispiels näher beschrieben. Es zeigen:
- Fig. 1:: eine Ansicht auf eine Vorrichtung mit einer einzigen Scheibe,
- Fig. 2:: eine Ansicht auf eine Vorrichtung mit zwei Scheiben,
- Fig. 3:: eine Ansicht einer Vorrichtung mit einem Kraftspeicherelement,
- Fig. 4:: eine Vorrichtung mit einer Scheibenanordnung für drei Halmgutreihen, und
- Fig. 5:: eine Scheibenanordnung für drei Halmgutreihen mit einer Federung für jede Reihe.

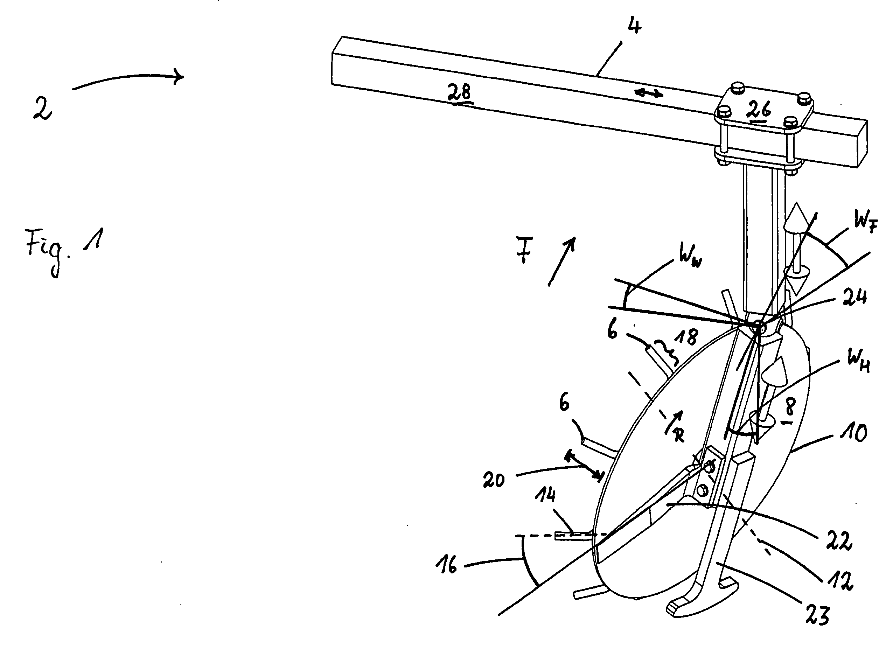

In Fig. 1 ist ein Beispiel für eine erfindungsgemäße Vorrichtung 2 mit einem Halterahmen 4 gezeigt. Mit dem Haltrahmen 4 ist eine Scheibe 8 verbunden, die eine Anzahl von Zinken 6 aufweist, die über den Außenumfang 10 der Scheibe 8 hervor stehen. Die Scheibe 8 dient im Ausführungsbeispiel als eine Ausführungsform für einen Rotationskörper. Natürlich können auch andere Formen von Rotationskörpern verwendet werden.

Die Scheibe 8 verfügt über eine Rotationsachse 12. Wird die Vorrichtung 2 in Fahrtrichtung F bewegt, dreht sich die Scheibe 8 um die Rotationsachse 12 in die Rotationsrichtung R, wenn die Zinken 6 und eventuell auch die Scheibe 8 Kontakt zum Boden haben, passiv mit.

Infolge der Rotationsbewegung der Scheibe 8 berühren alle Zinken 6 im Verlauf einer vollen Umdrehung zunächst an einer Stelle den Boden, werden dann bei fortgesetzter Drehbewegung und gleichem Abstand der Scheibe 8 zum Boden tiefer in den Boden hinein unter die Pflanzenreste gestoßen, bis die entsprechende Befestigungsposition dieses Zinkens 6 auf der Scheibe 8 den tiefsten Punkt während einer Umdrehung erreicht, um sodann wegen der dann wieder nach oben gerichteten Rotationsbewegung der Scheibe 8 wieder aus dem Boden heraus gezogen zu werden und sich vom Boden zu entfernen.

In Fig. 1 ist erkennbar, dass die Längsachse 14 der Zinken 6 mit dem Abschnitt 18, mit dem die Zinken 6 über den Außenumfang der Scheibe 8 hervor stehen, um den Anstellwinkel 16 zur Rotationsebene der Scheibe 8 angeordnet sind. Dadurch ergibt sich ein seitlicher Versatz 20 der Spitzen der Abschnitte 18 zur Rotationsebene der Scheibe 8. In diesen Versatzraum hinein können die Zinken 6 einen Halmgutrest während einer Rotationsbewegung anheben und aufrichten. Die Zinken 6 weisen im Ausführungsbeispiel im Abschnitt 18 eine zylindrische Form mit einer umfangsseitig gerundeten Oberfläche auf.

In Fig. 1 ist eine Abstreifervorrichtung 22 angedeutet, die sich auf einer Seite der Scheibe 8 quer über ihren Radius hinweg erstreckt. Haftet bei einer Rotationsbewegung der Scheibe 8 Material an deren Oberfläche an, kollidiert es zwangsläufig mit dem Abstreifer 22 und wird so von der Oberfläche der Scheibe 8 abgeschält. Die Oberfläche der Scheibe 8 bleibt so frei von Anhaftungen. Außerdem ist in Fig. 1 die Schleifkufe 23 gezeigt, über die sich die Vorrichtung 2 zumindest mit einem Teil des Gewichts auf dem Boden abstützen kann und die Scheibe 8 um diesen Betrag entlastet wird. Die Schleifkufe 23 kann höhenverstellbar oder klappbar ausgeführt sein, um sie besser den jeweiligen Einsatzbedingungen anpassen zu können.

In Fig. 1 ist erkennbar, dass die Rotationsachse 12 der Scheibe 8 sowohl in einem Winkel WF zur Fahrtrichtung F als auch in einem Winkel WW zur Waagerechten und in einem Winkel WH zur Hochachse angestellt ist. Die jeweiligen Winkellagen werden durch das Gelenk 24 ermöglicht. Das Gelenk 24 kann wahlweise verstellbar ausgestaltet sein. Auch eine Höhenverstellung ist möglich, wie sie durch den Doppelpfeil angedeutet ist.

Am Halterahmen 4 ist außerdem eine Klemmvorrichtung 26 erkennbar, mit der die Scheibe 8 an einem Querträger 28 des Halterahmens 4 befestigt ist. Löst man die Klemmvorrichtung, so kann die Scheibe 8 nach links und rechts entlang des Querträgers 28 quer zur Fahrtrichtung F verschoben werden.

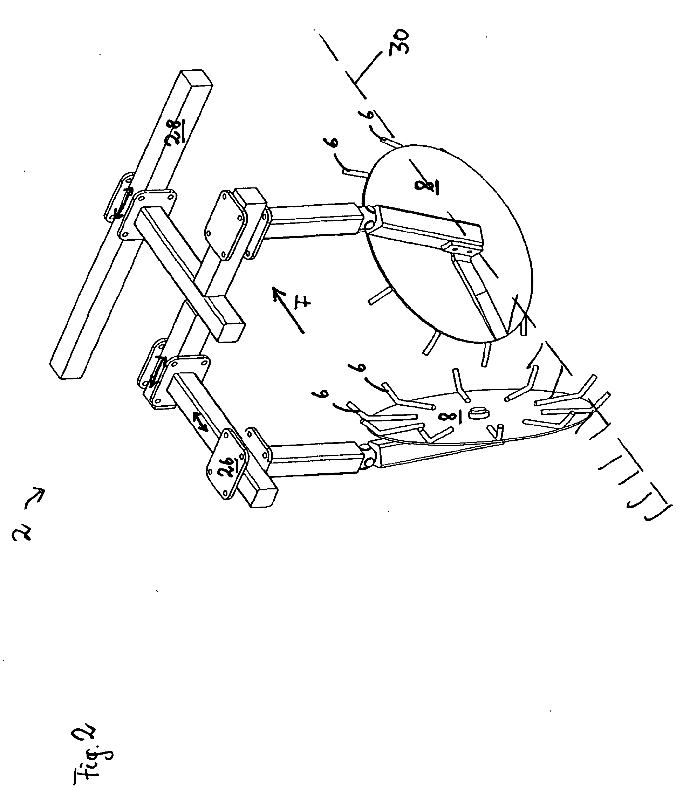

In Fig. 2 ist eine Vorrichtung mit zwei Scheiben 8 gezeigt, die in Fahrtrichtung F hintereinander gestaffelt und seitlich in Querrichtung leicht versetzt zueinander angeordnet sind. Während die in Fahrtrichtung vordere der beiden Scheiben 8 mit ihrer Vorderkante nach rechts ausladend in einem Winkel WF zur Fahrtrichtung F angestellt ist, ist die hintere Scheibe 8 mit ihrer Vorderkante nach links ausladend in einem Winkel WF zur Fahrtrichtung F angestellt. Wird diese Vorrichtung 2 so entlang eine Stoppelreihe bewegt, dass die Stoppelreihe genau zwischen den beiden Scheiben 8 hindurch läuft, so werden die Stoppel dieser Stoppelreihe aufeinanderfolgend von den Zinken 6 beider Scheiben 8 angehoben.

Da die Klemmvorrichtung 26, mit der die hintere Scheibe 8 am Halterahmen 4 befestigt ist, an einen Längsträger angreift, der sich in Fahrtrichtung F erstreckt, kann die hintere Scheibe 8 nach dem Lösen der Klemmvorrichtung 26 in Längsrichtung verstellt werden.

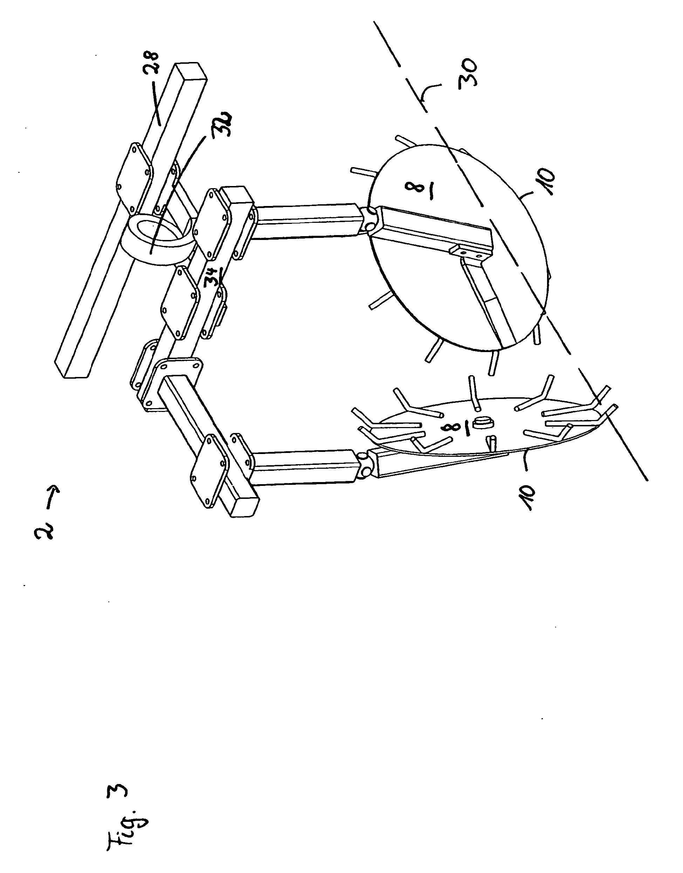

In Fig. 3 ist zwischen dem Querträger 28 und der rahmenseitigen Aufnahme 34 für die beiden Scheiben 8 eine Feder 32 als ein Ausführungsbeispiel für ein Kraftspeicherelement angeordnet. Sind die beiden Scheiben 8 mit ihrem Außenumfang 10 in Kontakt mit dem Boden, und wird der Querträger 28 beispielsweise über eine traktorseitige 3-Punkt-Aufhängung nach unten gedrückt, verschiebt sich die relative Lage des Querträgers 28 und der Aufnahme 34 zueinander, und die einwirkenden Kräfte werden in der Feder 32 gespeichert. Ergibt sich für die Scheiben 8 eine Möglichkeit, nach unten auszuweichen, wie beispielsweise in einer Bodenvertiefung, so werden die Scheiben 8 durch die in der Feder 32 gespeicherten Kräfte in die Bodenvertiefung gedrückt. In gleicher Weise erlaubt die Feder 32 aber auch eine Ausweichbewegung nach oben, wenn der Querträger 28 in einem gleichen Abstand zum Boden verbleibt, jedoch eine Bodenerhöhung die Scheiben 8 nach oben drückt. Auch diese Kräfte werden in der Feder 32 aufgenommen, und die dort aufgebauten Rückstellkräfte bringen die Scheiben 8 wieder in ihre Ausgangsposition zurück, wenn die Kräfte aus der Bodenerhebung entfallen.

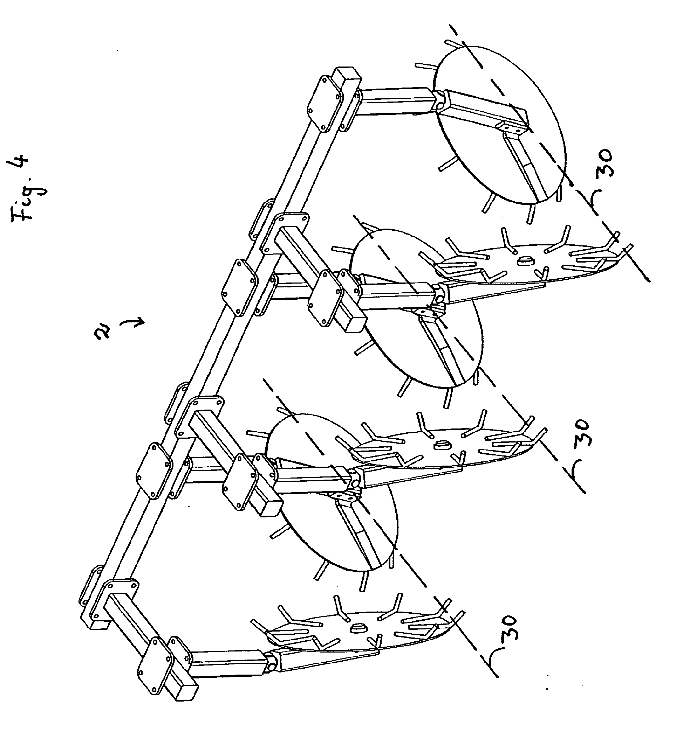

In Fig. 4 ist eine Vorrichtung 2 gezeigt, bei der am Querträger 28 drei Paare von Scheiben 8 befestigt sind, mit der gleichzeitig drei Halmgutreihen 30 angehoben werden können. Bei diesem Ausführungsbeispiel sind die vorderen Scheiben 8 direkt am Querträger 28 befestigt, während die hinteren Scheiben 8 jeweils an einem Längsträger befestigt sind.

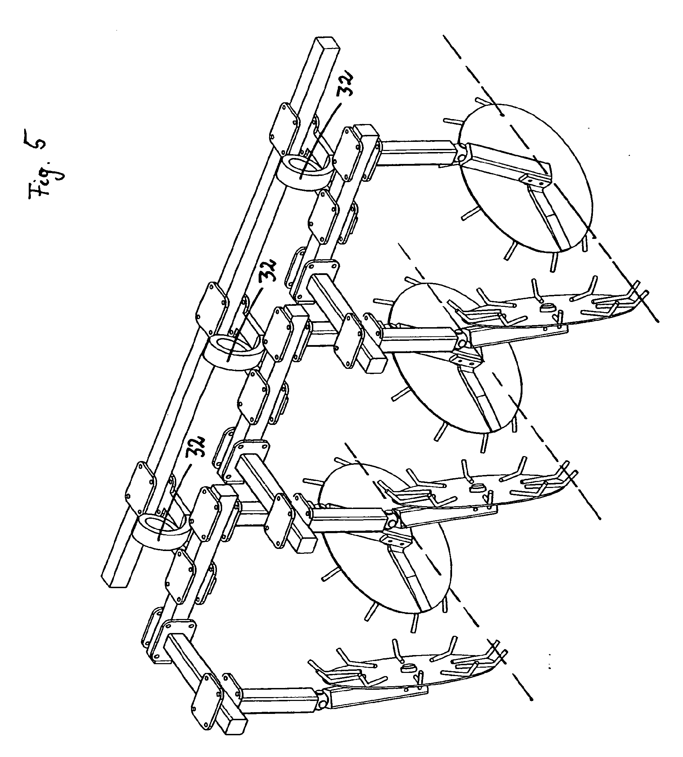

In Fig. 5 ist eine Ausführung der Vorrichtung 2 gezeigt, bei der ebenfalls drei Paare von Scheiben 8 an einem Querträger befestigt sind, allerdings verfügt jedes der Paare über eine eigene Aufnahme 34, die jeweils über eine Feder 32 mit dem Querträger 28 verbunden ist. Auf diese Weise kann sich jedes der Paare in seiner relativen Höhenlage zum Querträger 28 individuell an die jeweils einwirkenden Bodenverhältnisse anpassen. So ist über die gesamte Arbeitsbreite der Vorrichtung 2 eine optimale Anpassung an die Bodenkontur möglich.

Die Erfindung ist nicht auf die vorstehenden beschriebenen Ausführungsbeispiele beschränkt, die nur beispielhaft der Beschreibung der Erfindung dienen. Dem Fachmann bereitet es keine Schwierigkeiten, die vorstehend beschriebenen Ausführungsbeispiele auf eine ihm als geeignet erscheinende Weise an einen konkreten Anwendungsfall durch entsprechende Veränderungen anzupassen.

## Patentansprüche

1. Vorrichtung (2) zum Aufrichten von Halmgut mit zumindest einem an einem Halterahmen (4) angeordneten Aufrichtewerkzeug, **dadurch gekennzeichnet, dass** das Aufrichtewerkzeug einen drehbar gelagerten Rotationskörper, der eine Kreisform aufweist und mit seinem Außenumfang (10) auf einer Bodenfläche abstützbar ist, und eine Anzahl von an dem Rotationskörper befestigten, über den Umfang des Rotationsköpers hinausragenden und um den Umfang des Rotationskörpers verteilten Zinken (6) aufweist, wobei die Längsachsen der Zinken (6) in ihrem über den Außenumfang (10) des Rotationskörpers hinausragenden Abschnitt (18) in einem Anstellwinkel zur Rotationsebene des Rotationskörpers angeordnet sind.

2. Vorrichtung (2) nach Anspruch 1, **dadurch gekennzeichnet, dass** der Anstellwinkel der Zinken (6) 30° bis 60° zur Rotationsebene beträgt und die Zinken (6) um eine Länge von 3 cm bis 8 cm über den Außenumfang (10) des Rotationskörpers hinausragen.

3. Vorrichtung (2) nach Anspruch 1 oder 2, **dadurch gekennzeichnet, dass** die Zinken (6) eine gerundete Oberfläche aufweisen.

4. Vorrichtung (2) nach einem der vorhergehenden Ansprüche, **dadurch gekennzeichnet, dass** der Rotationskörper als Scheibe (8) ausgestaltet ist, auf die die Zinken (6) aufgesetzt sind.

5. Vorrichtung (2) nach einem der vorhergehenden Ansprüche, **dadurch gekennzeichnet, dass** die Scheibe (8) Versteifungselemente aufweist.

6. Vorrichtung (2) nach einem der vorhergehenden Ansprüche, **dadurch gekennzeichnet, dass** die Rotationsachse (12) der Scheibe (8) in einem Winkel von 10° bis 60° im Verhältnis zur Fahrtrichtung (F) der Vorrichtung (2) und/oder in einem Winkel von 10° bis 45° zur Waagerechten angestellt ist.

7. Vorrichtung (2) nach einem der vorhergehenden Ansprüche, **dadurch gekennzeichnet, dass** die Scheibe (8) in Längsrichtung, Querrichtung und/oder um die Hochachse insgesamt und/oder die Rotationsachse (12) der Scheibe (8) im Verhältnis zur Fahrtrichtung (F) und/oder der Waagerechten verstellbar am Halterahmen (4) befestigt ist.

8. Vorrichtung (2) nach einem der vorhergehenden Ansprüche, **dadurch gekennzeichnet, dass** der Scheibe (8) eine Abstreifvorrichtung (22) zugeordnet ist.

9. Vorrichtung (2) nach einem der vorhergehenden Ansprüche, **dadurch gekennzeichnet, dass** die Vorrichtung (2) eine Schleifkufe und/oder einen beweglichen Schleifkörper aufweist.

10. Vorrichtung (2) nach einem der vorhergehenden Ansprüche, **dadurch gekennzeichnet, dass** die Scheibe (8) über ein Kraftspeicherelement (22) am Halterahmen (4) abgestützt ist.

11. Vorrichtung (2) nach einem der vorhergehenden Ansprüche, **dadurch gekennzeichnet, dass** am Halterahmen (4) mehrere Scheiben (8) in einer in Fahrtrichtung (F) aufeinander folgenden Staffelung angeordnet sind.

12. Vorrichtung (2) nach einem der vorhergehenden Ansprüche, **dadurch gekennzeichnet, dass** am Halterahmen (4) mehrere Scheiben (8) angeordnet und die Rotationsachsen (12) der Scheiben (8) in unterschiedlichen Richtungen zur Fahrtrichtung (F) angestellt sind.

13. Vorrichtung (2) nach einem der vorhergehenden Ansprüche, **dadurch gekennzeichnet, dass** die die Vorrichtung (2) im Frontanbau gemeinsam mit einem Nachbearbeitungsgerät, im Frontanbau mit einem seitlich am Traktor angeordneten Nachbearbeitungsgerät, im Seitenanbau gemeinsam mit einem Nachbearbeitungsgerät oder im Heckanbau gemeinsam mit einem Nachbearbeitungsgerät an einen Traktor anbaubar ist.

14. Vorrichtung (2) nach einem der vorhergehenden Ansprüche, **dadurch gekennzeichnet, dass** die Vorrichtung (2) in ein Gerät zur Halmgutbearbeitung integriert ist.

## Claims

1. Arrangement (2) for erecting stalked crops, having at least one erecting tool arranged on a supporting frame (4), **characterised in that** the erecting tool has a rotatably mounted body of revolution which is circular in shape, which can be supported on a ground surface by its outer circumference (10) and which has a plurality of tines (6) which are fastened to the body of revolution, which project beyond the circumference of the body of revolution and which are distributed around the circumference of the body of revolution, those portions (18) of the longitudinal axes of the tines (6) which project beyond the outer circumference (10) of the body of revolution being arranged at a positioned angle to the plane of revolution of the body of revolution.

2. Arrangement (2) according to claim 1, **characterised in that** the positioned angle of the tines (6) is 30° to 60° to the plane of revolution and the tines (6) project beyond the outer circumference (10) of the body of revolution for a length of 3 cm to 8 cm.

3. Arrangement (2) according to claim 1 or 2, **characterised in that** the tines (6) have a rounded surface.

4. Arrangement (2) according to one of the preceding claims, **characterised in that** the body of revolution takes the form of a disc (8) to which the tines (6) are fitted.

5. Arrangement (2) according to one of the preceding claims, **characterised in that** the disc (8) has stiffening members.

6. Arrangement (2) according to one of the preceding claims, **characterised in that** the axis of revolution (12) of the disc (8) is positioned at an angle of 10° to 60° to the direction of travel (F) of the arrangement (2) and/or at an angle of 10° to 45° to the horizontal.

7. Arrangement (2) according to one of the preceding claims, **characterised in that** the disc (8) is fastened to the supporting frame (4) in such a way as to be adjustable in the longitudinal direction, transverse direction and/or about the overall vertical axis and/or the axis of revolution (12) of the disc (8), relative to the direction of travel (F) and/or the horizontal.

8. Arrangement (2) according to one of the preceding claims, **characterised in that** the disc (8) has a wiper device (22) associated with it.

9. Arrangement (2) according to one of the preceding claims, **characterised in that** the arrangement (2) has a sliding skid and/or a movable sliding body.

10. Arrangement (2) according to one of the preceding claims, **characterised in that** the disc (8) is supported on the supporting frame (4) by means of a member for storing force (22).

11. Arrangement (2) according to one of the preceding claims, **characterised in that** a plurality of discs (8) are arranged on the supporting frame (4) in a successive staggered arrangement in the direction of travel (F).

12. Arrangement (2) according to one of the preceding claims, **characterised in that** a plurality of discs (8) are arranged on the supporting frame (4) and the axes of revolution (12) of the discs (8) are positioned in different directions relative to the direction of travel (F).

13. Arrangement (2) according to one of the preceding claims, **characterised in that** the arrangement (2) can be mounted on a tractor by front mounting together with a post-processing unit, by front mounting together with a post-processing unit laterally arranged on the tractor, by side mounting together with a post-processing unit, or by rear mounting together with a post-processing unit.

14. Arrangement (2) according to one of the preceding claims, **characterised in that** the arrangement (2) is incorporated in a unit for doing work on stalked crops.

## Revendications

1. Dispositif (2) d'alignement de matières en brins avec au moins un outil d'alignement disposé sur un cadre de retenue (4), **caractérisé en ce que** l'outil d'alignement présente un corps de rotation logé de manière à pouvoir tourner, qui présente une forme circulaire et peut être en appui par sa périphérie extérieure (10) sur une surface de fond, et un nombre de dents (6) fixées sur le corps de rotation, s'élevant au-delà de la périphérie du corps de rotation et réparties autour de la périphérie du corps de rotation, sachant que la section (18) s'élevant au-delà de la périphérie extérieure (10) du corps de rotation des axes longitudinaux des dents (6) est disposée dans un angle d'incidence par rapport au plan de rotation du corps de rotation.

2. Dispositif (2) selon la revendication 1, **caractérisé en ce que** l'angle d'incidence des dents (6) est compris entre 30 et 60° par rapport au plan de rotation et les dents (6) s'élèvent d'une longueur comprise entre 3 et 8 cm au-delà de la périphérie extérieure (10) du corps de rotation.

3. Dispositif (2) selon la revendication 1 ou 2, **caractérisé en ce que** les dents (6) présentent une surface arrondie.

4. Dispositif (2) selon l'une quelconque des revendications précédentes, **caractérisé en ce que** le corps de rotation est configuré comme un disque (8), sur lequel les dents (6) sont placées.

5. Dispositif (2) selon l'une quelconque des revendications précédentes, **caractérisé en ce que** le disque (8) présente des éléments de renforcement.

6. Dispositif (2) selon l'une quelconque des revendications précédentes, **caractérisé en ce que** l'axe de rotation (12) du disque (8) est positionné dans un angle de 10 à 60° par rapport au sens de la marche (F) du dispositif (2) et/ou dans un angle compris entre 10 et 45° par rapport à l'horizontale.

7. Dispositif (2) selon l'une quelconque des revendications précédentes, **caractérisé en ce que** le disque (8) est fixé de manière réglable dans le sens longitudinal, transversal et/ou autour de l'axe vertical dans l'ensemble et/ou l'axe de rotation (12) du disque (8) par rapport au sens de la marche (F) et/ou l'horizontale sur le cadre de retenue (4).

8. Dispositif (2) selon l'une quelconque des revendications précédentes, **caractérisé en ce qu'**un dispositif de raclage (22) est associé au disque (8).

9. Dispositif (2) selon l'une quelconque des revendications précédentes, **caractérisé en ce que** le dispositif (2) présente un patin frotteur et/ou un corps frotteur mobile.

10. Dispositif (2) selon l'une quelconque des revendications précédentes, **caractérisé en ce que** le disque (8) est en appui par le biais d'un élément accumulateur de force (22) contre le cadre de retenue (4).

11. Dispositif (2) selon l'une quelconque des revendications précédentes, **caractérisé en ce que** plusieurs disques (8) sont disposés sur le cadre de retenue (4) dans un échelonnement consécutif dans le sens de la marche (F).

12. Dispositif (2) selon l'une quelconque des revendications précédentes, **caractérisé en ce que** plusieurs disques (8) sont disposés sur le cadre de retenue (4) et les axes de rotation (12) des disques (8) sont positionnés dans différentes directions par rapport au sens de la marche (F).

13. Dispositif (2) selon l'une quelconque des revendications précédentes, **caractérisé en ce que** le dispositif (2) peut être monté à l'avant conjointement avec un appareil de post-traitement, à l'avant conjointement avec un appareil de post-traitement disposé latéralement sur le tracteur, sur le côté conjointement avec un appareil de post-traitement ou à l'arrière conjointement avec un appareil de post-traitement sur un tracteur.

14. Dispositif (2) selon l'une quelconque des revendications précédentes, **caractérisé en ce que** le dispositif (2) est intégré dans un appareil pour le traitement de matières en brins.
